# EUROPEAN PATENT APPLICATION

(11) **EP 4 625 965 A1**
(43) Date of publication of application: **01.10.2025**
(21) Application number: 24196590.4
(22) Date of filing: 27.08.2024
(51) Int. Cl.: H04N 1/60

(54) **IMAGE FORMING SYSTEM, PRINTING CONTROL PROGRAM, AND PRINTING CONTROL METHOD**

(30) Priority: 25.03.2024 JP 2024048555
(71) Applicant: FUJIFILM Business Innovation Corp., Minato-ku Tokyo (JP)
(72) Inventor: TANAKA, Shogo, Yokohama-shi, Kanagawa (JP); MATSUBARA, Koichi, Yokohama-shi, Kanagawa (JP)
(74) Representative: Kurig, Thomas

(57) **Abstract**

An image forming system includes a processor configured to control a printing device such that a position of a gradation pattern scanned by a scanning device is changed and printed on a recording medium on which the gradation pattern is printed in accordance with at least one of a type of the recording medium or a transport orientation which is an orientation in which the recording medium is transported in the scanning device.

## Description

### BACKGROUND OF THE INVENTION

### (i) Field of the Invention

The present disclosure relates to an image forming system, a printing control program, and a printing control method.

### (ii) Description of Related Art

For example, JP2001-239731A describes a printing method of a calibration pattern in a printer that records an image on a recording sheet while leaving a margin and cuts at least a part of the margin with a cutter. In this printing method, a calibration pattern is printed in the margin cut by the cutter during the recording of the image.

### SUMMARY OF THE INVENTION

Incidentally, there is a technology of performing gradation correction by scanning a gradation pattern printed on a recording medium such as a sheet by a scanning device. In a case where the gradation pattern is scanned by the scanning device, and in a case where the scanning device is influenced by fluctuation in a transport speed of the recording medium, the scanning of the gradation pattern by the scanning device may be influenced, and it may be difficult to accurately perform the gradation correction.

An object of the present disclosure is to provide an image forming system, a printing control program, and a printing control method capable of accurately performing gradation correction in a case where gradation correction is performed by scanning a gradation pattern printed on a recording medium by a scanning device as compared with a case where a region of the recording medium which is influenced by fluctuation in a transport speed of the recording medium is not avoided.

In order to achieve the above object, according to a first aspect of the present disclosure, there is provided an image forming system including a processor configured to control a printing device such that a position of a gradation pattern scanned by a scanning device is changed and printed on a recording medium on which the gradation pattern is printed in accordance with at least one of a type of the recording medium or a transport orientation which is an orientation in which the recording medium is transported in the scanning device.

In addition, according to a second aspect of the present disclosure, in the image forming system according to the first aspect, the processor may be configured to control gradation characteristics of an output of the printing device based on fluctuation in image data of the gradation pattern printed together with job image data which is image data corresponding to a printing job of a user on the recording medium.

In addition, according to a third aspect of the present disclosure, in the image forming system according to the second aspect, the processor may be configured to control the gradation characteristics of the output of the printing device during execution of the printing job.

In addition, according to a fourth aspect of the present disclosure, in the image forming system according to any one of the first aspect to the third aspect, the type may include at least one of a size, a basis weight, or a medium type.

In addition, according to a fifth aspect of the present disclosure, in the image forming system according to any one of the first aspect to the fourth aspect, the processor may be configured to change a first position at which a first gradation pattern is printed to a second position which is not influenced by fluctuation in a transport speed in accordance with characteristics of the recording medium in a case where the first gradation pattern is printed in at least a part of a region of the recording medium which is influenced by the fluctuation in the transport speed of the recording medium.

In addition, according to a sixth aspect of the present disclosure, in the image forming system according to the fifth aspect, the second position may be a position at which a second gradation pattern of which the influence of the fluctuation in the transport speed is smaller than in the first gradation pattern is printed, and the processor may be configured to interchange the first position and the second position.

In addition, according to a seventh aspect of the present disclosure, in the image forming system according to the sixth aspect, the processor may be configured to interchange the first position and the second position for each of the plurality of first gradation patterns in a case where there are a plurality of the first gradation patterns and a plurality of the second gradation patterns.

In addition, according to an eighth aspect of the present disclosure, in the image forming system according to the fifth aspect, the scanning device may include a transport roll that transports the recording medium, and a scanning unit that scans the gradation pattern of the recording medium, and the processor may be configured to specify the region of the recording medium which is influenced by the fluctuation in the transport speed, based on a positional relationship between the transport roll and the scanning unit, a size of the recording medium, and the transport orientation.

In addition, according to a ninth aspect of the present disclosure, in the image forming system according to any one of the first aspect to the eighth aspect, the processor may be configured to control the printing device such that at least one of the number of screen lines or a screen angle of the gradation pattern is changed and printed on the recording medium, instead of changing the position of the gradation pattern.

Further, in order to achieve the above object, according to a tenth aspect of the present disclosure, there is provided a printing control program causing a computer to execute processing including controlling a printing device such that a position of a gradation pattern scanned by a scanning device is changed and printed on a recording medium on which the gradation pattern is printed in accordance with at least one of a type of the recording medium or a transport orientation which is an orientation in which the recording medium is transported in the scanning device.

Further, in order to achieve the above object, according to an eleventh aspect of the present disclosure, there is provided a printing control method including controlling a printing device such that a position of a gradation pattern scanned by a scanning device is changed and printed on a recording medium on which the gradation pattern is printed in accordance with at least one of a type of the recording medium or a transport orientation which is an orientation in which the recording medium is transported in the scanning device.

According to the first aspect, the tenth aspect, and the eleventh aspect, it is possible to perform accurately the gradation correction in a case where the gradation correction is performed by scanning the gradation pattern printed on the recording medium by the scanning device, as compared with a case where the region of the recording medium which is influenced by the fluctuation in the transport speed of the recording medium is not avoided.

According to the second aspect, it is possible to control the gradation characteristics of the output of the printing device based on the fluctuation in the image data of the gradation pattern.

According to a third aspect, it is possible to control the gradation characteristics of the output of the printing device during the execution of the printing job.

According to the fourth aspect, it is possible to change the position of the gradation pattern in accordance with at least one of the size or the basis weight of the recording medium.

According to the fifth aspect, it is possible to change the first position at which the first gradation pattern is printed to the second position which is not influenced by the fluctuation in the transport speed in accordance with the characteristics of the recording medium.

According to the sixth aspect, it is possible to interchange the first position at which the first gradation pattern is printed and the second position at which the second gradation pattern of which the influence of the fluctuation in the transport speed is smaller than in the first gradation pattern is printed.

According to the seventh aspect, it is possible to similarly interchange the first position and the second position even in a case where there are a plurality of first gradation patterns and a plurality of second gradation patterns.

According to the eighth aspect, it is possible to specify the region of the recording medium that is influenced by the fluctuation in the transport speed.

According to the ninth aspect, it is possible to accurately perform the gradation correction by changing the gradation pattern instead of changing the position of the gradation pattern.

### BRIEF DESCRIPTION OF THE DRAWINGS

Exemplary embodiment(s) of the present invention will be described in detail based on the following figures, wherein:
Fig. 1 is a diagram illustrating an example of a configuration of an image forming system according to a first exemplary embodiment;
Fig. 2 is a diagram illustrating an example of a recording medium on which a gradation pattern is printed;
Fig. 3 is a block diagram illustrating an example of an electrical configuration of a print server according to the first exemplary embodiment;
Fig. 4 is a block diagram illustrating an example of an electrical configuration of a printing device according to the first exemplary embodiment;
Fig. 5 is a diagram illustrating a state where a scanning device according to the exemplary embodiment is viewed from a side;
Fig. 6A is a diagram illustrating a scanned image obtained by scanning a vertical stripe chart by the scanning device;
Fig. 6B is a diagram illustrating an image obtained by enlarging a C part and a D part of the scanned image illustrated in Fig. 6A;
Fig. 7 is a block diagram illustrating an example of a functional configuration of the print server according to the exemplary embodiment;
Fig. 8 is a diagram for describing a form in which a position of a first gradation pattern is changed in the recording medium;
Fig. 9 is a diagram for describing another form in which the position of the first gradation pattern is changed in the recording medium;
Fig. 10 is a flowchart illustrating an example of a flow of processing performed by a printing control program according to the first exemplary embodiment.
Fig. 11 is a diagram for describing a form in which a first gradation pattern according to a second exemplary embodiment is changed; and
Fig. 12 is a flowchart illustrating an example of a flow of processing performed by a printing control program according to the second exemplary embodiment.

### DETAILED DESCRIPTION OF THE INVENTION

Hereinafter, an example of a mode for implementing a technology of the present disclosure will be described in detail with reference to the drawings. Note that, components and processing having similar operations, actions, and functions are given identical reference symbols throughout the drawings, and redundant descriptions may be omitted as appropriate. Each drawing is only schematically illustrated to the extent that the technology of the present disclosure can be fully understood. Thus, the technology of the present disclosure is not limited only to the illustrated examples. In addition, in the present exemplary embodiment, descriptions of configurations that are not directly related to the technology of the present disclosure and well-known configurations may be omitted.

### [First exemplary embodiment]

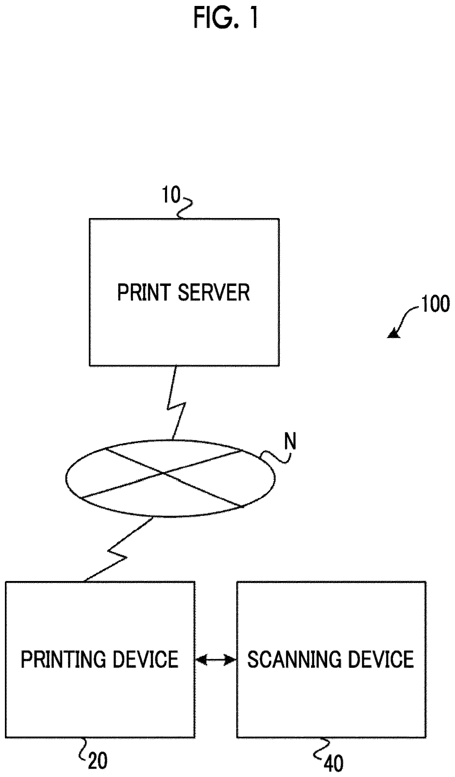

Fig. 1 is a diagram illustrating an example of a configuration of an image forming system 100 according to a first exemplary embodiment.

As illustrated in Fig. 1, the image forming system 100 according to the present exemplary embodiment includes a print server 10, a printing device 20, and a scanning device 40.

The print server 10 is connected to the printing device 20 via a network N. Note that, the Internet, a local area network (LAN), a wide area network (WAN), or the like is used for the network N. A connection form of the network N is not limited and may be any of a wired form, a wireless form, or a form in which the wired form and the wireless form are mixed. The print server 10 performs various settings on the printing device 20, transmits a printing job to the printing device 20, and controls a printing operation of the printing device 20.

The printing device 20 is a device that executes printing processing according to the printing job from the print server 10. Specifically, the printing device 20 has a printing function of printing an image represented by image data included in the printing job on a recording medium such as a sheet.

The scanning device 40 is connected to a rear stage of the printing device 20 and has a function of scanning the recording medium on which the image is printed by the printing device 20. Specifically, the image forming system 100 includes a function of performing gradation correction by scanning a gradation pattern printed on the recording medium by the scanning device 40 during the execution of the printing job (hereinafter, referred to as an "in-job correction function".). However, the in-job correction function can be executed before the execution of the printing job.

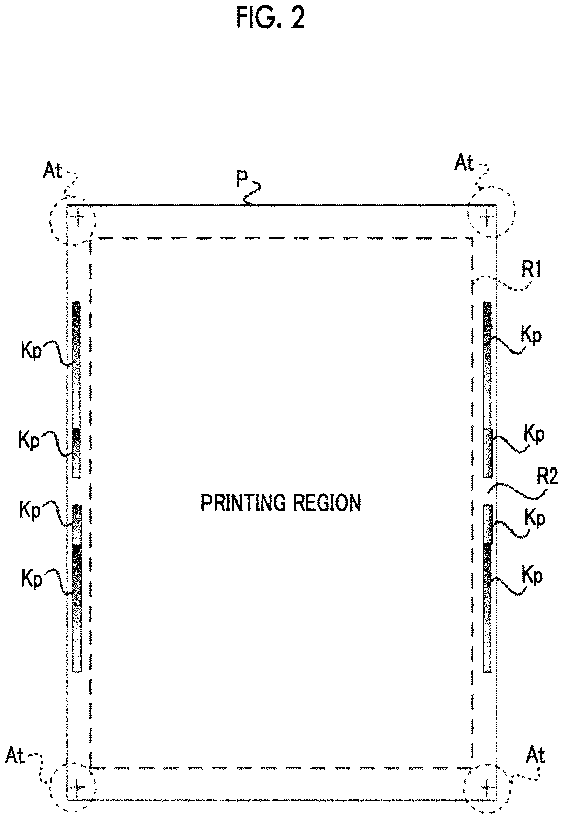

Fig. 2 is a diagram illustrating an example of a recording medium P on which a gradation pattern is printed. The recording medium P is, for example, an A3-sized sheet, and includes a printing region R1 which is a region in which image data to be printed by a user is printed, and a blank region R2 which is a region in which gradation patterns Kp and alignment crop marks At are printed. The blank region R2 is a region that is cut after printing.

The gradation patterns Kp and the alignment crop marks At are scanned by the scanning device 40, and density fluctuation and front-back misalignment are detected during the execution of the printing job. The gradation patterns Kp are a plurality of types of patterns for detecting the density fluctuation. In the in-job correction function, gradation patterns Kp of a first page and gradation patterns Kp of subsequent pages are compared with each other, and a gradation correction value based on the comparison result is fed back to the printing device 20. For example, a density of a gradation pattern of yellow (Y), magenta (M), cyan (C), and black (K) is measured, and a correction value is calculated such that a deviation from a reference value (for example, the density of the gradation pattern Kp of the first page) is eliminated. Gradation characteristics of the printing device 20 are controlled such that a reference density is obtained based on this correction value.

The "crop mark" described herein is a guide for aligning front and back surfaces of the recording medium P. The alignment crop mark At is a mark for detecting the front-back misalignment. In the in-job correction function, the alignment crop marks At of the first page and the alignment crop marks At of the subsequent pages are compared with each other, and a correction value based on the comparison result is fed back to the printing device 20.

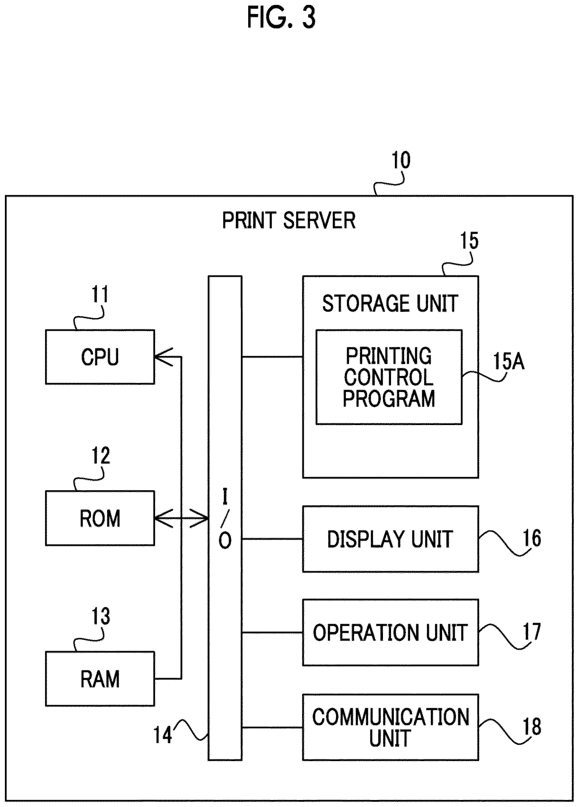

Fig. 3 is a block diagram illustrating an example of an electrical configuration of the print server 10 according to the first exemplary embodiment.

As illustrated in Fig. 3, the print server 10 according to the present exemplary embodiment includes a central processing unit (CPU) 11, a read only memory (ROM) 12, a random access memory (RAM) 13, an input and output interface (I/O) 14, a storage unit 15, a display unit 16, an operation unit 17, and a communication unit 18.

The CPU 11, the ROM 12, the RAM 13, and the I/O 14 are connected via a bus. Functional units including the storage unit 15, the display unit 16, the operation unit 17 and the communication unit 18 are connected to the I/O 14. These functional units can mutually communicate with the CPU 11 via the I/O 14.

The CPU 11, the ROM 12, the RAM 13, and the I/O 14 constitute a control unit. The control unit may be a sub-control unit that controls an operation of a part of the print server 10 or may be a part of a main control unit that controls an overall operation of the print server 10. For example, an integrated circuit such as a large scale integration (LSI) or an integrated circuit (IC) chipset is used for a part or all of the blocks of the control unit. An individual circuit may be used for each of the blocks, or a circuit in which a part or all of the blocks are integrated may be used. The blocks may be provided integrally, or a part of the blocks may be provided separately. In addition, in each of the blocks, a part thereof may be separately provided. A dedicated circuit or a general-purpose processor may be used for integration of the control unit, and is not limited to the LSI.

Examples of the storage unit 15 include a hard disk drive (HDD), a solid state drive (SSD), a flash memory, and the like. A printing control program 15A according to the present exemplary embodiment is stored in the storage unit 15. Note that, the printing control program 15A may be stored in the ROM 12.

The printing control program 15A may be installed in advance in, for example, the print server 10. The printing control program 15A may be realized by storing the printing control program 15A in a non-volatile storage medium or distributing the printing control program 15A via the network N and appropriately installing the printing control program 15A in the print server 10. Note that, examples of the non-volatile storage medium include a compact disc read only memory (CD-ROM), a magneto-optical disc, a HDD, a digital versatile disc read only memory (DVD-ROM), a flash memory, a memory card, and the like.

Examples of the display unit 16 include a liquid crystal display (LCD), an organic electro luminescence (EL) display, and the like. The display unit 16 may integrally have a touch panel. For example, devices for operation input such as a keyboard and a mouse are provided in the operation unit 17. The display unit 16 and the operation unit 17 accept various instructions from the user of the print server 10.

The display unit 16 displays various kinds of information such as results of processing executed in accordance with the instructions accepted from the user, notifications regarding the processing, and the like.

As an example, the communication unit 18 is connected to the network N such as the Internet, the LAN, or the WAN, and can communicate with the printing device 20 via the network N.

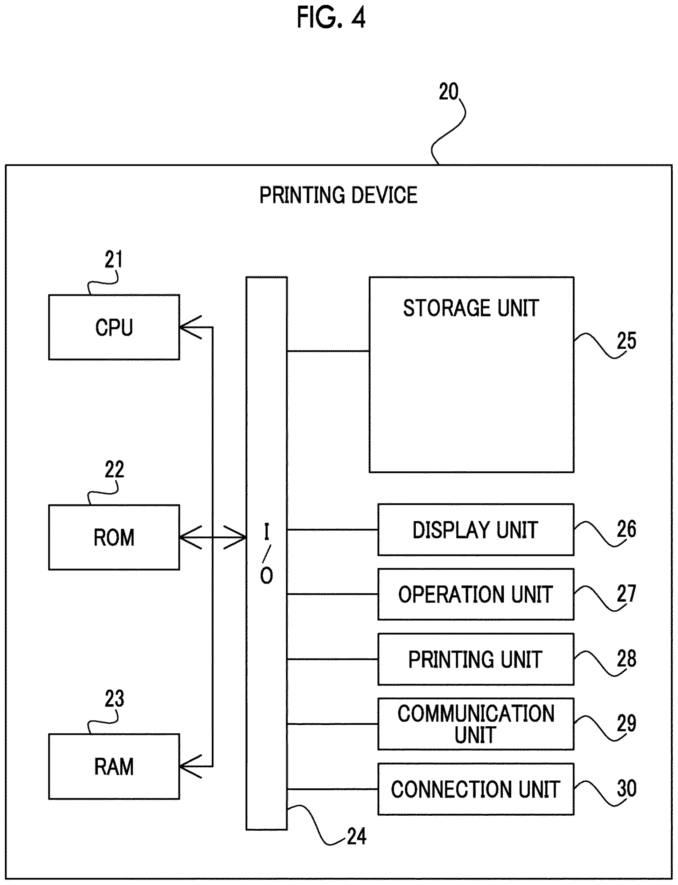

Fig. 4 is a block diagram illustrating an example of an electrical configuration of the printing device 20 according to the first exemplary embodiment.

As illustrated in Fig. 4, the printing device 20 according to the present exemplary embodiment comprises a CPU 21, a ROM 22, a RAM 23, an I/O 24, a storage unit 25, a display unit 26, an operation unit 27, a printing unit 28, a communication unit 29, and a connection unit 30.

The CPU 21, the ROM 22, the RAM 23, and the I/O 24 are connected to each other via a bus. Functional units including the storage unit 25, the display unit 26, the operation unit 27, the printing unit 28, the communication unit 29, and the connection unit 30 are connected to the I/O 24. Each of the functional units can communicate with the CPU 21 via the I/O 24.

A control unit is configured with the CPU 21, the ROM 22, the RAM 23, and the I/O 24. The control unit may be a sub-control unit that controls an operation of a part of the printing device 20, or may be a part of a main control unit that controls an overall operation of the printing device 20.

Examples of the storage unit 25 include an HDD, an SSD, a flash memory, and the like. The storage unit 25 stores a program necessary for executing the printing processing. Note that, the program may be stored in the ROM 22.

Examples of the display unit 26 include a liquid crystal display (LCD), an organic EL display, and the like. The display unit 26 may integrally have a touch panel. Various operation keys such as a numeric keypad and a start key are provided in the operation unit 27, for example. The display unit 26 and the operation unit 27 accept, as an operation panel, various functions and instructions related to settings of the printing device 20.

The printing unit 28 forms an image based on image data obtained by a printing instruction from the print server 10 on a sheet which is an example of the recording medium. Note that, hereinafter, an electrophotographic method will be described as an example of a method of forming an image, but another method such as an inkjet method may be adopted.

In a case where the method of forming the image is the electrophotographic method, the printing unit 28 includes a photoconductor drum, a charging device, an exposure device, a developing device, a transfer device, and a fixing device. The charging device applies a voltage to the photoconductor drum to charge a surface of the photoconductor drum. The exposure device exposes the photoconductor drum charged by the charging device with light corresponding to the image data, and thus, an electrostatic latent image is formed on the photoconductor drum. The developing device develops the electrostatic latent image formed on the photoconductor drum with a toner to form a toner image on the photoconductor drum. The transfer device transfers the toner image formed on the photoconductor drum to the sheet. The fixing device fixes the toner image transferred to the sheet by heating and pressurizing.

The communication unit 29 is a communication interface for connection with the network N such as the Internet, LAN, and WAN, and is capable of communicating with the print server 10 via the network N. The connection unit 30 is an interface for connection with the scanning device 40. The scanning device 40 is connected to a rear stage of the printing device 20, and the recording medium P on which printing is performed by the printing device 20 is transported to the scanning device 40.

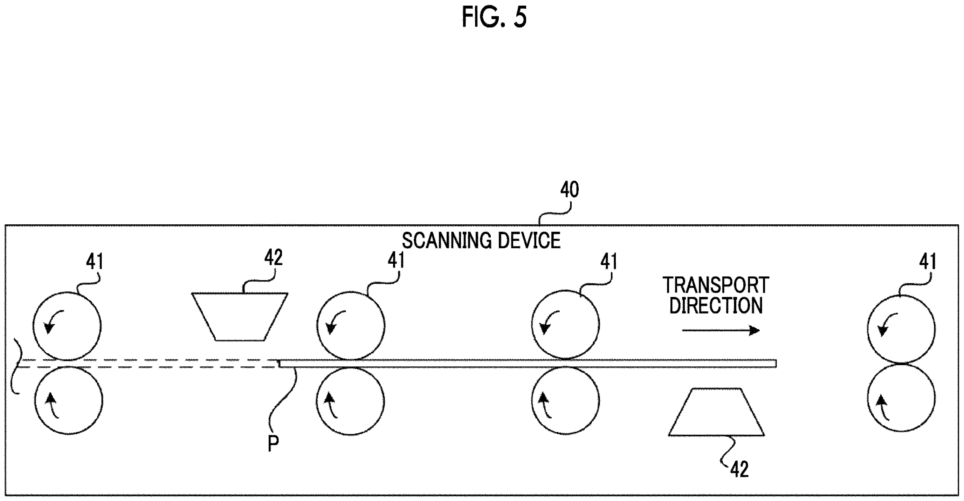

Fig. 5 is a diagram illustrating a state where the scanning device 40 according to the present exemplary embodiment is viewed from a side. The scanning device 40 includes a plurality of pairs of transport rolls 41 that transport the recording medium P, and a plurality of scanning units 42 that scan the gradation patterns Kp of the recording medium P.

In the example in Fig. 5, although four pairs of transport rolls 41 are illustrated, the number of transport rolls is not limited to four pairs. The necessary number of transport rolls may be provided in accordance with performance required for the scanning device 40. The scanning unit 42 on an upstream side in a transport direction scans the gradation patterns on a front surface of the recording medium P, and the scanning unit 42 on a downstream side in the transport direction scans the gradation patterns on a back surface of the recording medium P. Note that, a scanning resolution of the scanning device 40 may be fixed or may be variable.

Here, in the scanning device 40, in a case where the recording medium P enters the transport roll 41 or in a case where the recording medium P exits the transport roll 41, a transport speed of the recording medium P may fluctuate. During the execution of the in-job correction function, in a case where the scanning device 40 scans the gradation patterns Kp, and in a case where the scanning device 40 is influenced by the fluctuation in the transport speed of the recording medium P, the scanning of the gradation pattern Kp by the scanning device 40 may be influenced, and it may be difficult to accurately perform the gradation correction.

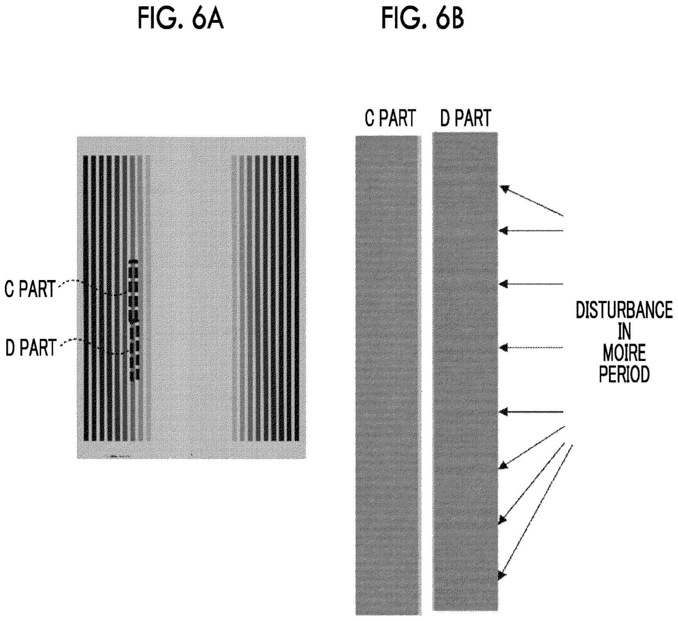

Fig. 6Ais a diagram illustrating a scanned image obtained by scanning a vertical stripe chart by the scanning device 40. Fig. 6B is a diagram illustrating an image obtained by enlarging a C part and a D part of the scanned image illustrated in Fig. 6A.

Figs. 6A and 6B illustrate moire caused in a K color (black) in the C part and the D part of Figs. 6A and 6B. As illustrated in Fig. 6B, in the C part, long-period moire occurs due to interference of the number of screen lines, a screen angle, and a scanning resolution derived from the K color. Note that, "the number of screen lines" is one of scales representing fineness of printing, and represents fineness of halftone dots (the number of halftone dots in 1 inch = 25.4 mm), and the unit is line per inch (lpi). "The screen angle" represents an angle of a screen line or an output halftone dot with respect to a horizontal line or a vertical line. On the other hand, since the D part is a region influenced by the speed fluctuation, a moire period is disturbed. Thus, scanning accuracy varies in the D part. That is, in a case where the gradation patterns Kp are printed in the region which is influenced by the speed fluctuation of the recording medium P, the disturbance in the moire period occurs in a scanned image obtained by scanning the gradation patterns Kp, and the scanning accuracy may vary.

Since a magnitude and a timing of the speed fluctuation of the recording medium P depend on a type (for example, size, basis weight, medium type, or the like) of the recording medium P and an orientation in which the recording medium P is transported, although there is no particular limitation, it is desirable that printing positions of the gradation patterns Kp are changed in accordance with, for example, at least one of these types or the transport orientation.

Thus, the image forming system 100 according to the present exemplary embodiment controls the printing device 20 such that positions of the gradation patterns Kp are changed and printed on the recording medium P in accordance with at least one of the type (for example, size, basis weight, medium type, or the like) of the recording medium P on which the gradation patterns Kp scanned by the scanning device 40 are printed or the orientation (transport orientation) in which the recording medium P is transported in the scanning device 40. Here, the type of the recording medium P includes, for example, at least one medium type such as an uncoated sheet, a coated sheet, a recycled sheet, an embossed sheet, a film, a metallized sheet, a label sheet, or a synthetic sheet, in addition to property values of size and basis weight. "The transport orientation" includes, for example, an orientation in which the recording medium is transported with a short side of the sheet as a leading end, and an orientation in which the recording medium is transported with a long side of the sheet as a leading end.

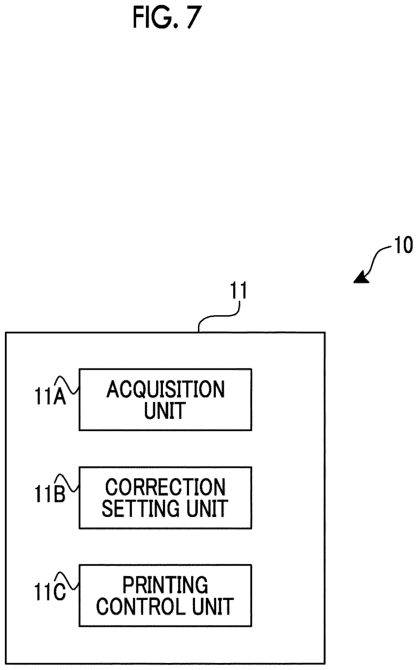

Specifically, the CPU 11 of the print server 10 according to the present exemplary embodiment functions as each unit illustrated in Fig. 7 by writing the printing control program 15A stored in the storage unit 15 or the ROM 12 to the RAM 13 and executing the printing control program 15A. Note that, the CPU 11 is an example of a processor.

Fig. 7 is a block diagram illustrating an example of a functional configuration of the print server 10 according to the present exemplary embodiment.

As illustrated in Fig. 7, the CPU 11 of the print server 10 according to the present exemplary embodiment functions as an acquisition unit 11A, a correction setting unit 11B, and a printing control unit 11C.

The acquisition unit 11A acquires the image data to be printed by the user and acquires the printing condition related to the image data. The acquisition unit 11A accepts the image data and the printing condition via, for example, a print setting screen (not illustrated). The printing condition includes, for example, the type of the recording medium P and the transport orientation of the recording medium P.

The correction setting unit 11B sets the in-job correction function. In a case where this setting is performed, the in-job correction function is valid. The correction setting unit 11B accepts, for example, the setting of the in-job correction function via a function setting screen (not illustrated).

In a case where the in-job correction function is set, the printing control unit 11C controls the printing device 20 such that the position of the gradation patterns Kp are changed and printed on the recording medium P in accordance with at least one of the type of the recording medium P or the transport orientation of the recording medium P. Specifically, for example, in a case where the basis weight of the recording medium P is equal to or larger than a threshold value, the printing control unit 11C changes the positions of the gradation patterns Kp. That is, the positions of the gradation pattern Kp are changed from the positions influenced by the speed fluctuation to positions not influenced by the speed fluctuation. Note that, a region of the recording medium P (hereinafter, referred to as a "fluctuation region".) which is influenced by the fluctuation in the transport speed is specified based on, for example, a positional relationship between the transport roll 41 and the scanning unit 42 of the scanning device 40, the size of the recording medium P, and the transport orientation of the recording medium P.

In addition, in a case where a thickness of the recording medium P is equal to or larger than a threshold value, the positions of the gradation patterns Kp may be changed. In addition, in a case where both the basis weight and the thickness of the recording medium P are equal to or larger than the threshold values, the positions of the gradation patterns Kp may be changed. For example, appropriate values are set in the "threshold values" of the basis weight and the thickness based on past knowledge, experimental results, and the like. In addition, in a case where the medium type of the recording medium P is a specific type (for example, coated sheet or the like), the positions of the gradation patterns Kp may be changed. In addition, in a case where the transport orientation of the recording medium P is an orientation in which the short side of the sheet is the leading end, the positions of the gradation patterns Kp may be changed. In addition, in a case where the basis weight of the recording medium P is equal to or larger than the threshold value and the transport orientation of the recording medium P is an orientation in which the short side of the sheet is the leading end, the positions of the gradation patterns Kp may be changed.

The printing control unit 11C controls gradation characteristics of the output of the printing device 20 based on fluctuation in image data of the gradation patterns Kp printed on the recording medium P together with job image data. Note that, the job image data is image data corresponding to the printing job of the user. Specifically, for example, the printing control unit 11C controls the gradation characteristics of the output of the printing device 20 during the execution of the printing job.

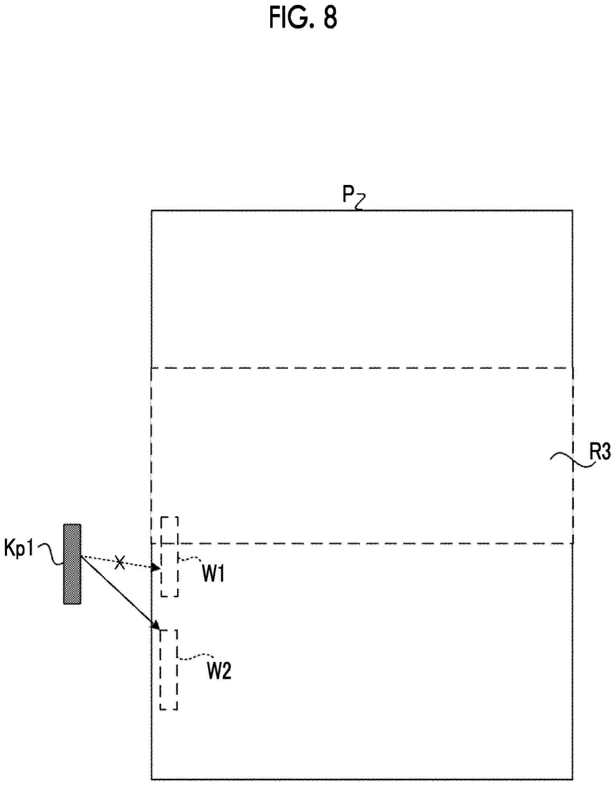

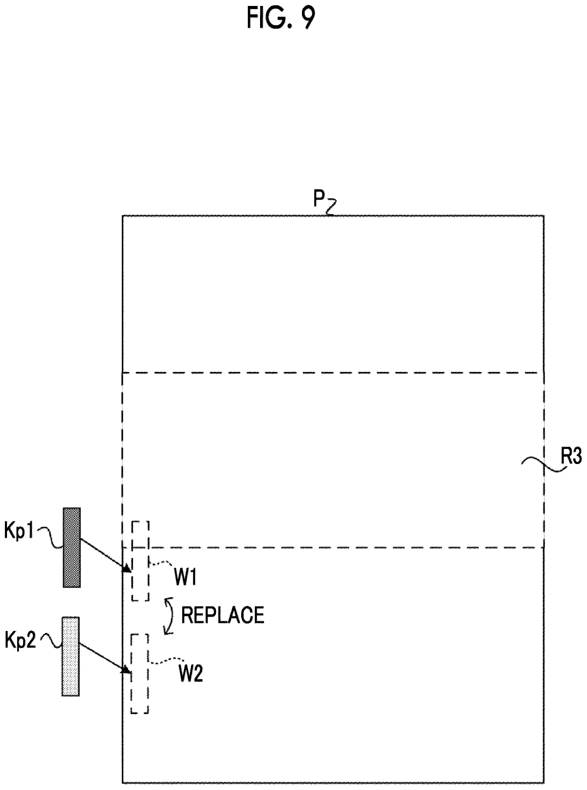

Next, a form in which a position of a first gradation pattern Kp1 is changed in the recording medium P will be specifically described with reference to Figs. 8 and 9.

Fig. 8 is a diagram for describing a form in which the position of the first gradation pattern Kp1 is changed in the recording medium P.

As described above, a fluctuation region R3 illustrated in Fig. 8 is a region which is influenced by the fluctuation in the transport speed in the recording medium P, and is specified based on the positional relationship between the transport roll 41 of the scanning device 40 and the scanning unit 42, the size of the recording medium P, and the transport orientation of the recording medium P. The fluctuation region R3 may be specified in advance in a design stage of the image forming system 100, or may be specified by the printing control unit 11C during the execution of the in-job correction function. A first position W1 and a second position W2 are positioned at which the gradation patterns are printed, and a part of the first position W1 is positioned in the fluctuation region R3.

The first gradation pattern Kp1 illustrated in Fig. 8 is any one of a plurality of types of gradation patterns Kp. The first gradation pattern Kp1 may be, for example, a gradation pattern in which the influence of the fluctuation in the transport speed is relatively large. In this case, the first gradation pattern Kp1 is predetermined, for example, in the design stage of the image forming system 100 by the scanning resolution of the scanning device 40, the number of screen lines used for printing, and the screen angle. The first gradation pattern Kp1 is, for example, a pattern in the K color. In a case where the first gradation pattern Kp1 is printed in at least a part of the fluctuation region R3 of the recording medium P, the printing control unit 11C changes the first position W1 at which the first gradation pattern Kp1 is printed to the second position W2 which is not influenced by the fluctuation in the transport speed, in accordance with characteristics (for example, basis weight, medium type, and the like) of the recording medium P.

Fig. 9 is a diagram for providing another form in which the position of the first gradation pattern Kp1 is changed in the recording medium P.

The second position W2 illustrated in Fig. 9 is a position at which the second gradation pattern Kp2 is printed. The second gradation pattern Kp2 is a gradation pattern in which the influence of the fluctuation in the transport speed is smaller than in the first gradation pattern Kp1. The second gradation pattern Kp2 is predetermined, for example, in the design stage of the image forming system 100 by the scanning resolution of the scanning device 40, the number of screen lines used for printing, and the screen angle. The second gradation pattern Kp2 is, for example, a pattern of a color other than the K color. In this case, the printing control unit 11C interchanges the first position W1 and the second position W2.

Note that, in a case where there are a plurality of first gradation patterns Kp1 and a plurality of second gradation patterns Kp2, the printing control unit 11C may interchange the first position W1 and the second position W2 for each of the plurality of first gradation patterns Kp1.

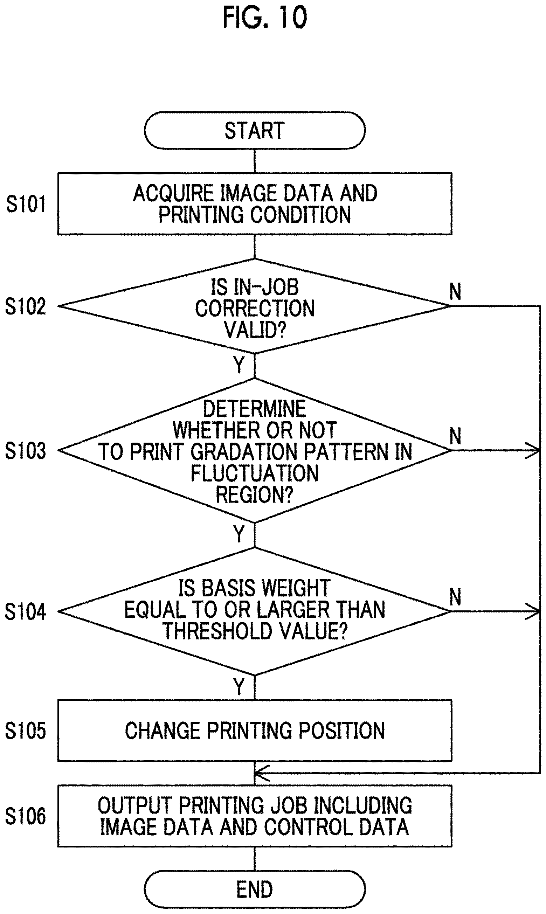

Next, an action of the print server 10 according to the first exemplary embodiment will be described with reference to Fig. 10.

Fig. 10 is a flowchart illustrating an example of a flow of processing by the printing control program 15A according to the first exemplary embodiment.

First, the printing control program 15A is started by the CPU 11 of the print server 10 to execute the following steps.

In step S101 in Fig. 10, the CPU 11 acquires the image data to be printed by the user and the printing condition related to the image data. The printing condition includes, for example, the type (for example, size, basis weight, medium type, or the like) of the recording medium P and the transport orientation of the recording medium P, as described above.

In step S102, the CPU 11 determines whether or not the in-job correction function is valid. In a case where it is determined that the in-job correction function is valid (in the case of affirmative determination), the processing proceeds to step S103. In a case where it is determined that the in-job correction function is not valid (in the case of negative determination), the processing proceeds to step S106.

As an example, in step S103, the CPU 11 determines whether or not to print the first gradation patterns Kp1 in at least a part of the fluctuation region R3 as illustrated in Fig. 8 described above. In a case where it is determined to print the first gradation pattern Kp1 in at least a part of the fluctuation region R3 (in the case of affirmative determination), the processing proceeds to step S104. In a case where it is determined not to print the first gradation pattern Kp1 in the fluctuation region R3 (in the case of negative determination), the processing proceeds to step S106.

In step S104, the CPU 11 determines whether or not the basis weight of the recording medium P is equal to or larger than the threshold value. In a case where it is determined that the basis weight of the recording medium P is equal to or larger than the threshold value (in the case of affirmative determination), the processing proceeds to step S105, and in a case where it is determined that the basis weight of the recording medium P is less than the threshold value (in the case of negative determination), the processing proceeds to step S106.

As an example, in step S105, as illustrated in Fig. 8 described above, the CPU 11 changes the first position W1 at which the first gradation pattern Kp1 is printed to the second position W2 not influenced by the fluctuation in the transport speed.

In step S106, the CPU 11 outputs the printing job including the image data and control data to the printing device 20 to end the series of processing performed by the present printing control program 15A.

As described above, according to the present exemplary embodiment, it is possible to suppress variation in a scanning gradation caused by the speed fluctuation of the recording medium by changing the printing positions of the gradation patterns, and it is possible to accurately perform the gradation correction. In addition, it is possible to change the positions of the gradation patterns and print the gradation patterns by effectively using the blank region of the recording medium.

In the present exemplary embodiment, although an example in which whether or not to change the positions of the gradation patterns is controlled by determining whether or not the basis weight of the recording medium is equal to or larger than the threshold value has been described, control may be performed such that the positions of the gradation patterns are changed in accordance with the basis weight by associating the basis weight and the positions of the gradation patterns with each other in advance without going through the determination processing. In addition, it goes without saying that the basis weight may be replaced with the size or the medium type.

### [Second exemplary embodiment]

In the first exemplary embodiment, the form in which the printing positions of the gradation patterns are changed has been described. In a second exemplary embodiment, a form in which the gradation patterns to be printed on the recording medium are changed will be described.

The printing control unit 11C according to the present exemplary embodiment controls the printing device 20 such that at least one of the number of screen lines or the screen angle of the gradation patterns Kp is changed in accordance with at least one of the type (for example, size, basis weight, medium type, or the like) of the recording medium P or the transport orientation of the recording medium P and is printed on the recording medium P in a case where the gradation patterns Kp are printed on at least a part of the fluctuation region R3 of the recording medium P.

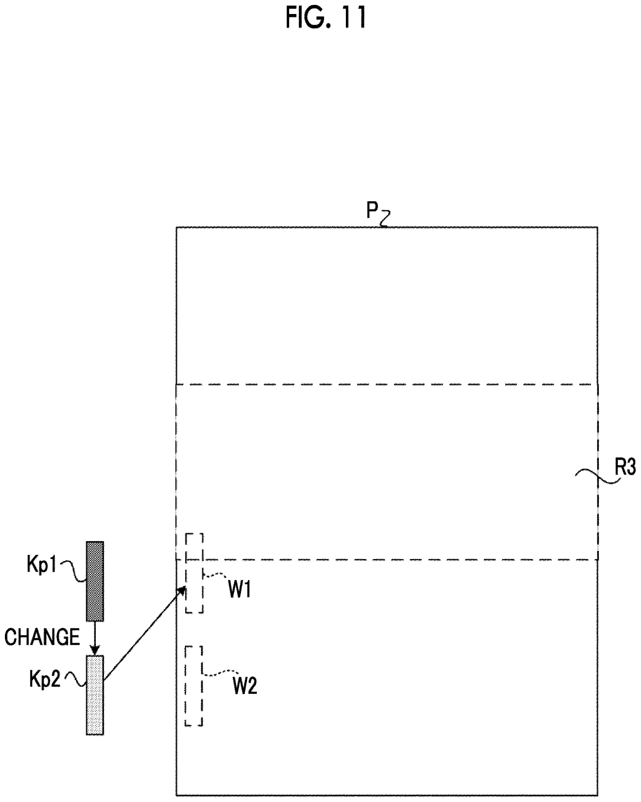

Fig. 11 is a diagram for describing a form in which the first gradation pattern Kp1 according to the second exemplary embodiment is changed.

As described above, the fluctuation region R3 illustrated in Fig. 11 is a region which is influenced by the fluctuation in the transport speed in the recording medium P. A first position W1 and a second position W2 are positioned at which the gradation patterns are printed, and a part of the first position W1 is positioned in the fluctuation region R3.

The first gradation pattern Kp1 illustrated in Fig. 11 is any one of the plurality of types of gradation patterns Kp. The first gradation pattern Kp1 may be, for example, a gradation pattern in which the influence of the fluctuation in the transport speed is relatively large. In a case where the first gradation pattern Kp1 is printed at the first position W1, the printing control unit 11C performs control such that the first gradation pattern Kp1 is changed to the second gradation pattern Kp2 different from the first gradation pattern Kp1 and is printed at the first position W1. The second gradation pattern Kp2 is a gradation pattern in which the influence of the fluctuation in the transport speed is smaller than in the first gradation pattern Kp1.

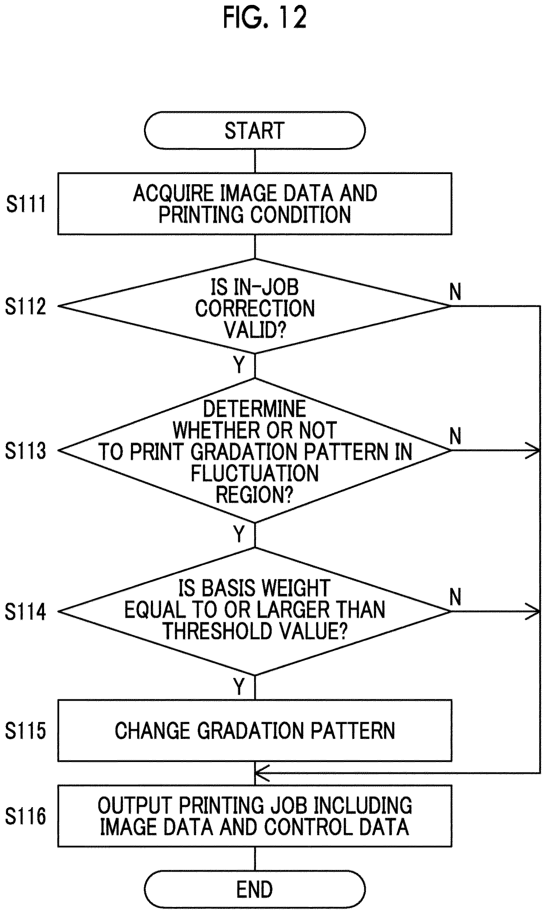

Next, an action of the print server 10 according to the second exemplary embodiment will be described with reference to Fig. 12.

Fig. 12 is a flowchart illustrating an example of a flow of processing by the printing control program 15A according to the second exemplary embodiment.

First, the printing control program 15A is started by the CPU 11 of the print server 10 to execute the following steps.

In step S111 of Fig. 12, the CPU 11 acquires the image data to be printed by the user and the printing condition related to the image data. The printing condition includes, for example, the type (for example, size, basis weight, medium type, or the like) of the recording medium P and the transport orientation of the recording medium P, as described above.

In step S112, the CPU 11 determines whether or not the in-job correction function is valid. In a case where it is determined that the in-job correction function is valid (in the case of affirmative determination), the processing proceeds to step S113, and in a case where it is determined that the in-job correction function is not valid (in the case of negative determination), the processing proceeds to step S116.

As an example, in step S113, the CPU 11 determines whether or not to print the first gradation pattern Kp1 in at least a part of the fluctuation region R3 as illustrated in Fig. 11 described above. In a case where it is determined to print the first gradation pattern Kp1 in at least a part of the fluctuation region R3 (in the case of affirmative determination), the processing proceeds to step S114, and in a case where it is determined not to print the first gradation pattern Kp1 in the fluctuation region R3 (in the case of negative determination), the processing proceeds to step S116.

In step S114, the CPU 11 determines whether or not the basis weight of the recording medium P is equal to or larger than the threshold value. In a case where it is determined that the basis weight of the recording medium P is equal to or larger than the threshold value (in the case of affirmative determination), the processing proceeds to step S115, and in a case where it is determined that the basis weight of the recording medium P is less than the threshold value (in the case of negative determination), the processing proceeds to step S116.

As an example, in step S115, the CPU 11 changes the first gradation pattern Kp1 to the second gradation pattern Kp2 in which the influence of the speed fluctuation is smaller as illustrated in Fig. 11 described above.

In step S116, the CPU 11 outputs the printing job including the image data and the control data to the printing device 20 to end the series of processing performed by the present printing control program 15A.

As described above, according to the present exemplary embodiment, it is possible to suppress the variation in the scanning gradation caused by the speed fluctuation of the recording medium by changing the gradation pattern, and it is possible to accurately perform the gradation correction.

As in the first exemplary embodiment, in the present exemplary embodiment, although an example in which whether or not to change the positions of the gradation patterns is controlled by determining whether or not the basis weight of the recording medium is equal to or larger than the threshold value has been described, control may be performed such that the positions of the gradation patterns are changed in accordance with the basis weight by associating the basis weight and the positions of the gradation patterns with each other in advance without going through the determination processing. In addition, it goes without saying that the basis weight may be replaced with the size or the medium type.

In each of the exemplary embodiments, although the print server 10 has been described as the control subject, the printing device 20 may be a control subject. In a case where the printing device 20 is the control subject, the printing control program according to the present exemplary embodiment may be stored in the storage unit 25 or the ROM 22 of the printing device 20, and the CPU 21 may read out and execute the printing control program.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The image forming system according to the exemplary embodiment is described as an example. The exemplary embodiment may be in a form of a program causing a computer to execute the functions of the units provided in the image forming system. The exemplary embodiment may be in the form of a non-transitory computer readable medium storing the program.

In addition, the configuration of the image forming system described in the above exemplary embodiment is an example, and may be changed in accordance with the situation without departing from the gist.

The flow of processing of the program described in the above exemplary embodiment is also an example, and unnecessary steps may be deleted, new steps may be added, or the processing order may be changed without departing from the scope.

In the above exemplary embodiment, although a case where the processing according to the exemplary embodiment is realized by a software configuration by using a computer by executing a program has been described, the present disclosure is not limited thereto. The exemplary embodiment may be realized by, for example, a hardware configuration or a combination of hardware and software configurations.

The following additional supplementary notes are disclosed regarding the above exemplary embodiment.

### (Supplementary Note)

(((1))) An image forming system comprising:
   a processor configured to:
   control a printing device such that a position of a gradation pattern scanned by a scanning device is changed and printed on a recording medium on which the gradation pattern is printed in accordance with at least one of a type of the recording medium or a transport orientation which is an orientation in which the recording medium is transported in the scanning device.
(((2))) The image forming system according to (((1))), wherein the processor is configured to:
   control gradation characteristics of an output of the printing device based on fluctuation in image data of the gradation pattern printed together with job image data which is image data corresponding to a printing job of a user on the recording medium.
(((3))) The image forming system according to (((2))), wherein the processor is configured to:
   control the gradation characteristics of the output of the printing device during execution of the printing job.
(((4))) The image forming system according to any one of (((1))) to (((3))),
   wherein the type includes at least one of a size, a basis weight, or a medium type.
(((5))) The image forming system according to any one of (((1))) to (((4))), wherein the processor is configured to:
   change a first position at which a first gradation pattern is printed to a second position which is not influenced by fluctuation in a transport speed in accordance with characteristics of the recording medium in a case where the first gradation pattern is printed in at least a part of a region of the recording medium which is influenced by the fluctuation in the transport speed of the recording medium.
(((6))) The image forming system according to (((5))),
   wherein the second position is a position at which a second gradation pattern of which the influence of the fluctuation in the transport speed is smaller than in the first gradation pattern is printed, and
   the processor is configured to:
      interchange the first position and the second position.
(((7))) The image forming system according to (((6))), wherein the processor is configured to:
   interchange the first position and the second position for each of the plurality of first gradation patterns in a case where there are a plurality of the first gradation patterns and a plurality of the second gradation patterns.
(((8))) The image forming system according to (((5))),
   wherein the scanning device includes a transport roll that transports the recording medium, and a scanning unit that scans the gradation pattern of the recording medium, and
   the processor is configured to:
      specify the region of the recording medium which is influenced by the fluctuation in the transport speed, based on a positional relationship between the transport roll and the scanning unit, a size of the recording medium, and the transport orientation.
(((9))) The image forming system according to any one of (((1))) to (((8))), wherein the processor is configured to:
   control the printing device such that at least one of the number of screen lines or a screen angle of the gradation pattern is changed and printed on the recording medium, instead of changing the position of the gradation pattern.
(((10))) A printing control program causing a computer to execute processing comprising:
   controlling a printing device such that a position of a gradation pattern scanned by a scanning device is changed and printed on a recording medium on which the gradation pattern is printed in accordance with at least one of a type of the recording medium or a transport orientation which is an orientation in which the recording medium is transported in the scanning device.

According to (((1))) and (((10))), it is possible to perform accurately the gradation correction in a case where the gradation correction is performed by scanning the gradation pattern printed on the recording medium by the scanning device, as compared with a case where the region of the recording medium which is influenced by the fluctuation in the transport speed of the recording medium is not avoided.

According to (((2))), it is possible to control the gradation characteristics of the output of the printing device based on the fluctuation in the image data of the gradation pattern.

According to (((3))), it is possible to control the gradation characteristics of the output of the printing device during the execution of the printing job.

According to (((4))), it is possible to change the position of the gradation pattern in accordance with at least one of the size or the basis weight of the recording medium.

According to (((5))), it is possible to change the first position at which the first gradation pattern is printed to the second position which is not influenced by the fluctuation in the transport speed in accordance with the characteristics of the recording medium.

According to (((6))), it is possible to interchange the first position at which the first gradation pattern is printed and the second position at which the second gradation pattern of which the influence of the fluctuation in the transport speed is smaller than in the first gradation pattern is printed.

According to (((7))), it is possible to similarly interchange the first position and the second position even in a case where there are a plurality of first gradation patterns and a plurality of second gradation patterns.

According to (((8))), it is possible to specify the region of the recording medium that is influenced by the fluctuation in the transport speed.

According to (((9))), it is possible to accurately perform the gradation correction by changing the gradation pattern instead of changing the position of the gradation pattern.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: print server
11: CPU
11A: acquisition unit
11B: correction setting unit
11C: printing control unit
12: ROM
13: RAM
14: I/O
15: storage unit
15A: printing control program
16: display unit
17: operation unit
18: communication unit
20: printing device
40: scanning device
100: image forming system

## Claims

1. An image forming system comprising:
a processor configured to:
control a printing device such that a position of a gradation pattern scanned by a scanning device is changed and printed on a recording medium on which the gradation pattern is printed in accordance with at least one of a type of the recording medium or a transport orientation which is an orientation in which the recording medium is transported in the scanning device.

2. The image forming system according to claim 1, wherein the processor is configured to:
control gradation characteristics of an output of the printing device based on fluctuation in image data of the gradation pattern printed together with job image data which is image data corresponding to a printing job of a user on the recording medium.

3. The image forming system according to claim 2, wherein the processor is configured to:
control the gradation characteristics of the output of the printing device during execution of the printing job.

4. The image forming system according to any one of claims 1 to 3,
wherein the type includes at least one of a size, a basis weight, or a medium type.

5. The image forming system according to any one of claims 1 to 4, wherein the processor is configured to:
change a first position at which a first gradation pattern is printed to a second position which is not influenced by fluctuation in a transport speed in accordance with characteristics of the recording medium in a case where the first gradation pattern is printed in at least a part of a region of the recording medium which is influenced by the fluctuation in the transport speed of the recording medium.

6. The image forming system according to claim 5,
wherein the second position is a position at which a second gradation pattern of which the influence of the fluctuation in the transport speed is smaller than in the first gradation pattern is printed, and
the processor is configured to:
interchange the first position and the second position.

7. The image forming system according to claim 6, wherein the processor is configured to:
interchange the first position and the second position for each of the plurality of first gradation patterns in a case where there are a plurality of the first gradation patterns and a plurality of the second gradation patterns.

8. The image forming system according to claim 5,
wherein the scanning device includes a transport roll that transports the recording medium, and a scanning unit that scans the gradation pattern of the recording medium, and
the processor is configured to:
specify the region of the recording medium which is influenced by the fluctuation in the transport speed, based on a positional relationship between the transport roll and the scanning unit, a size of the recording medium, and the transport orientation.

9. The image forming system according to any one of claims 1 to 8, wherein the processor is configured to:
control the printing device such that at least one of the number of screen lines or a screen angle of the gradation pattern is changed and printed on the recording medium, instead of changing the position of the gradation pattern.

10. A printing control program causing a computer to execute processing comprising:
controlling a printing device such that a position of a gradation pattern scanned by a scanning device is changed and printed on a recording medium on which the gradation pattern is printed in accordance with at least one of a type of the recording medium or a transport orientation which is an orientation in which the recording medium is transported in the scanning device.

11. A printing control method comprising:
controlling a printing device such that a position of a gradation pattern scanned by a scanning device is changed and printed on a recording medium on which the gradation pattern is printed in accordance with at least one of a type of the recording medium or a transport orientation which is an orientation in which the recording medium is transported in the scanning device.
